# EUROPÄISCHE PATENTSCHRIFT

(11) **EP 0 376 086 B1**
(45) Veröffentlichungstag und Bekanntmachung des Hinweises auf die Patenterteilung: **30.11.1994**
(21) Anmeldenummer: 89123199.5
(22) Anmeldetag: 15.12.1989
(51) Int. Cl.: C09B 67/22, D06P 1/18, C09B 29/085, C09B 29/045, C09B 67/38

(54) **Mischungen von Dispersionsazofarbstoffen**
Mixtures of disperse azo dyes
Mélanges de colorants de dispersion azoiques

(30) Priorität: 28.12.1988 DE 3844067
(43) Veröffentlichungstag der Anmeldung: 04.07.1990
(73) Patentinhaber: BAYER AG, 51368 Leverkusen (DE)
(72) Erfinder: Wiegner, Dieter, D-5068 Odenthal (DE); Elsner, Wolf-Dieter, Dipl.-Ing., D-5093 Burscheid (DE)

(56) Entgegenhaltungen:
- EP-A- 0 216 242
- EP-A- 0 228 092
- JAPANESE PATENTS GAZETTE, Sektion Ch, Woche 8831, 14. September 1988, Klasse F,Seite 17, Nr. 88-216733/31, Derwent Publications Ltd, Londen, GB; & JP-A-63 152 669 (MITSIBISHI CHEM. IND. K.K.) 25-06-1988
- JAPANESE PATENTS GAZETTE, Sektion Ch, Woche 8828, 24. August 1988, Klasse G,
- Seite 37, Nr. 88-195962/28, Derwent Publications Ltd, Londen, GB; & JP-A-63 135 578 (MITSUBISHI CHEM. IND. K.K.) 07-06-1988

## Beschreibung

Die vorliegende Erfindung betrifft Mischungen von Azofarbstoffen für das Färben von Polyester- und Polyamidfasern, die sich als Ersatz für das anthrachinoide C.I. Disperse Red 60 (C.I.-Nr. 60756) eignen.

Disperse Red 60 ist bislang zweifellos der bedeutendste rote Dispersionsfarbstoff, da dieser zu besonders klaren Färbungen mit hoher Lichtechtheit führt. Andererseits weist dieser Farbstoff den Nachteil der geringen Farbstärke auf, was inbesondere beim Färben in hohen Farbtiefen eine beträchtliche Kostensteigerung zur Folge hat.

Nachteilig sind weiterhin die deutliche Baumwollanschmutzung beim Färben von entsprechenden Polyestermischfasern sowie die Empfindlichkeit von Disperse Red 60 gegenüber Metallionen im Färbebad, weswegen diesem häufig Komplexbildner zugesetzt werden müssen.

Schließlich können bei mangelndem Auswaschen im Anschluß an eine alkalisch-reduktive Nachbehandlung der Polyesterfärbungen Farbtonumschläge auftreten.

Um die Unzulänglichkeiten des Anthrachinonfarbstoffes wenigstens teilweise zu beseitigen, ist bereits vorgeschlagen worden, Disperse Red 60 durch ausgewählte rote Azofarbstoffe zu ersetzen (vgl. DE-A 27 11 130, 29 37 329 und 35 33 527).

Während jedoch die Farbstoffe der erstgenannten Patentpublikation bei ansonsten ausgezeichneten Eigenschaften hinsichtlich des Ziehvermögens nicht voll befriedigen, sind die Farbstoffe gemäß DE-A 29 37 329 und 35 33 527 wegen ihrer geringeren Sublimierechtheit kein vollwertiger Ersatz für Disperse Red 60.

Auch die Azofarbstoffe gemäß DE-A 29 35 011, welche einen ähnlichen Farbton aufweisen wie Disperse Red 60, erreichen bei weitem nicht das hohe Echtheitsniveau des Anthrachinontyps.

Es wurde nun gefunden, daß man durch eine spezielle Kombination von ausgewählten Azofarbstoffen zu preiswerten und anwendungstechnisch hervorragenden Ersatzprodukten für den in Rede stehenden Anthrachinonfarbstoff gelangen kann.

Gegenstand der Erfindung sind somit Mischungen von Azofarbstoffen, enthaltend
a) mindestens einen Farbstoff der Formel (I) 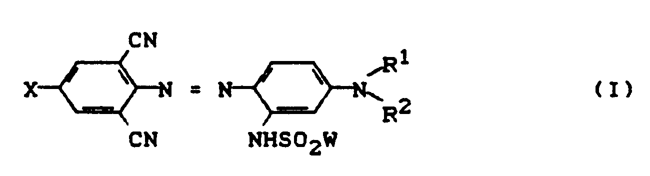 und
b) mindestens einen Farbstoff der Formel (II) 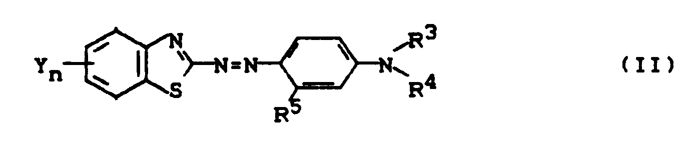 worin
   - n: für die Zahlen 1 oder 2,
   - X: für C₁-C₄-Alkyl, C₁-C₄-Alkoxy der Cyclohexyl,
   - Y: für Cl, NO₂, CN, SCN oder SO₂W,
   - R¹, R²: für C₁-C₆-Alkyl oder C₁-C₄-Alkoxy-C₂-C₄-Alkyl,
   - R³: für C₁-C₆-Alkyl oder R⁴,
   - R⁴: für C₂H₄CN, C₂H₄OCOW oder C₂H₄OCOOW,
   - R⁵: für H oder CH₃ und
   - W: für C₁-C₄-Alkyl oder Phenyl stehen.

Bevorzugt sind Farbstoffe der angegebenen Formeln, worin
- X: für Methyl, Methoxy, t-Butyl oder Cyclohexyl,
- Y: für nitro,
- R¹ und R²: für Ethyl oder n-Propyl,
- R³: für Ethyl, n-Butyl oder C₂H₄CN,
- R⁴: für C₂H₄OCOW oder - falls R³ = Ethyl/n-Butyl - C₂H₄CN
- R⁵: für H und
- W: für Methyl, Ethyl oder n-Propyl stehen.

Besonders bevorzugt sind Farbstoffe der Formeln I bzw. II, worin
- X: für Methyl,
- Y: für 6-Nitro,
- R¹ und R²: für Ethyl oder n-Propyl,
- W: für Methyl oder Ethyl stehen und
- R³,R⁴,R⁵: die vorstehend genannte Bedeutung haben.

Der Mischungsanteil der einzelnen Komponenten in den erfindungsgemäßen Gemischen beträgt im allgemeinen 10-90 Gew.-% Komponente I und 90-10 Gew.-% Komponente II, wobei sich die Summe selbstverständlich zu 100 % ergänzen muß.

Besonders bevorzugt ist ein Gewichtsverhältnis I/II von etwa 70 : 30.

Ganz besonders bevorzugt sind Mischungen der Farbstoffe 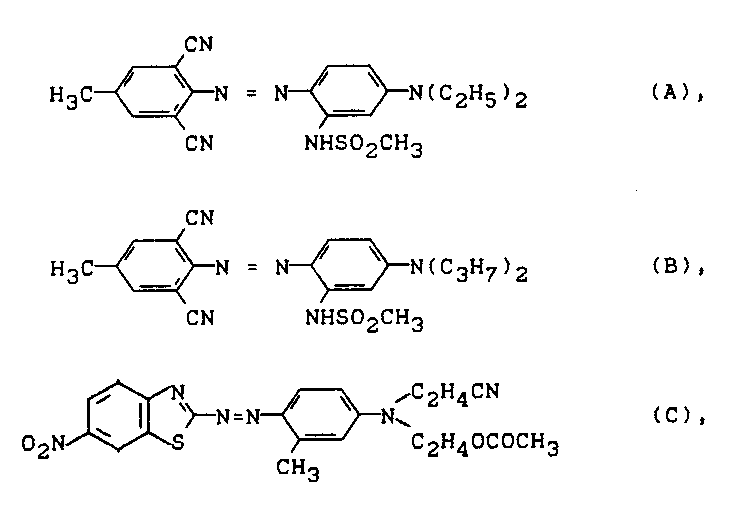
wobei das Mischungsverhältnis von A und/oder B zu C 90 : 10 bis 10 : 90, vorzugsweise 80 : 20 bis 20 : 80 und besonders bevorzugt etwa 70 : 30 ist.

Enthält die erfindungsgemäße Mischung sowohl die Komponente A als auch die Komponente B, so sind deren Mischungsverhältnisse praktisch beliebig. Bevorzugt ist aber auch in diesem Falle das Verhältnis A : B von etwa 70 : 30.

Weitere besonders geeignete Farbstoffindividuen sind solche der Formeln

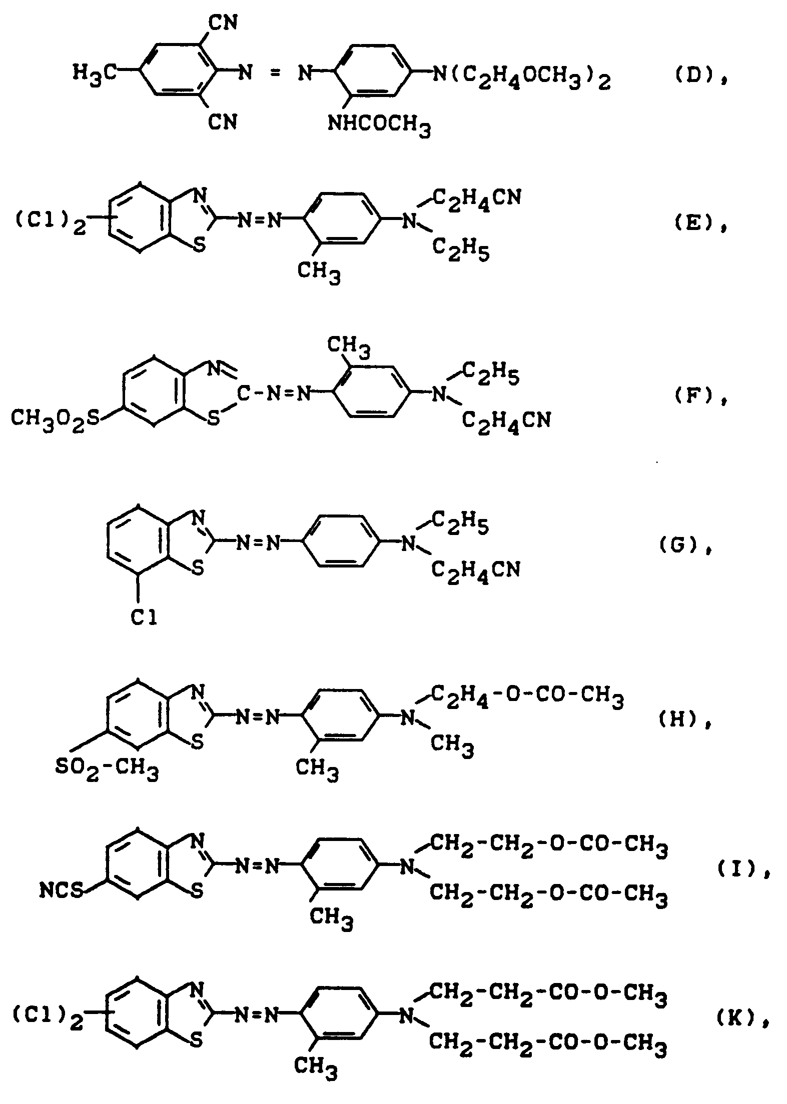

Die den Gemischen zugrundeliegenden Einzelfarbstoffe sind bekannt (vgl. DE-A 27 11 130 und 10 65 112 sowie GB 81 39 06 und 89 62 32).

Die neuen Farbstoffmischungen können nach verschiedenen Verfahren hergestellt werden:
1. durch Abmischen der separat hergestellten und formierten Einzelfarbstoffkomponenten,
2. durch gemeinsame Formierung der separat hergestellten Einzelkomponenten.

Im Bedarfsfall - z.B. bei Verwendung gelb- oder blaustichiger Rotfarbstoffe der Formel (II) - können darüber hinaus auch übliche Nuancierungsfarbstoffe zugesetzt werden.

Die Formierung zur Herstellung verkaufsfähiger Präparationen erfolgt nach an sich bekannten Verfahren.

Die neuen Farbstoffmischungen eignen sich zum Färben von Polyester- und Celluloseesterfasern und zeichnen sich bei gutem Echtheitsniveau durch einen klaren neutralen Rotton und eine deutlich geringere Temperaturabhängigkeit des Ziehvermögens im Bereich zwischen 100 und 130°C aus, insbesondere bei der Herstellung tiefer Farbtöne und der Anwendung kurzer Färbezeiten.

Darüber hinaus weisen die erfindungsgemäßen Mischungen im Vergleich zu den Einzelfarbstoffen eine hervorragende Dispersionsstabilität in den Färbebädern auf, d.h. sie neigen insbesondere beim Färben in tiefen Tönen deutlich weniger zu Farbstoffausfällungen auf dem Färbegut, beispielsweise den Wickelkörpern in den Färbemaschinen.

Die Farbstoffe eignen sich im übrigen auch zum Färben von synthetischen Polyamiden.

Aus EP-A 0 228 092 sind bereits Benzthiazolazofarbstoffe bekannt, die in Mischung mit bestimmten Azofarbstoffen zum Färben von Polyesterfasern geeignet sind.

In den nachfolgenden Beispielen bedeuten "Teile" Gewichtsteile.

### Beispiel 1

Durch Perlmahlung und anschließende Sprühtrocknung wird ein Färbepräparat aus
17,5 Teilen des Farbstoffs A
7,5 Teilen des Farbstoffs B
11,4 Teilen des Farbstoffs C
63,6 Teilen eines handelsüblichen Dispergiermittels
hergestellt.

In einem HT-Kreuzspulenfärbeapparat, dessen Flotte mit Natriumphosphat und Essigsäure auf einen pH-Wert von 4,5 gestellt ist, werden 100 Teile eines Polyester-Filamentgarns 30 Minuten bei 130°C mit 2,0 g des oben beschriebenen Färbepräparates (Flottenverhältnis 1:10) gefärbt. Danach sind bereits 98 % des Farbstoffs aufgezogen und fixiert. Man erhält eine klare, gleichmäßig rote Färbung mit guten Echtheiten.

### Beispiel 2

In einem Färbebad, das 5 g/l eines handelsüblichen Carriers (z.B. auf Basis aromatischer Carbonsäureester) enthält und mit Natriumphosphat und Essigsäure auf einen pH-Wert von 4,5 gestellt ist, werden 100 Teile eines Polyestergewebes mit 2,0 g der oben beschriebenen Farbstoffpräparation 30 Min. bei 90-98°C gefärbt. Man erhält eine tiefe Rotfärbung mit guten Echtheiten.

### Beispiel 3

Polyester/Baumwolle (1 : 1) -Strickware wird in einer HT-Färbemaschine mit 2,8 % (bezogen auf das Warengewicht) einer Farbstoff-Formierung (bestehend aus 15 Teilen A, 5 Teilen B, 15 Teilen C und 65 Teilen Formierhilfsmittel) nach folgender Rezeptur bei einem Flottenverhältnis von 1 : 6 gefärbt.

Die mit 1 g/l Dispergiermittel versetzte und auf pH 4,5 eingestellte Färbeflotte wird auf 70°C schnell erhitzt und anschließend der dispergierte Farbstoff durch ein Sieb zugesetzt. Nachdem die Farbflotte mit dem Material zur Vereinheitlichung 5 Minuten zirkuliert haben, wird die Farbflotte mit 3°C/min auf 130°C gesteigert und 30 Minuten bei dieser Temperatur verweilt. Nach dieser Verweilzeit ist der Farbstoff bereits zu 97 % auf den Polyesteranteil des Materials aufgezogen. Die Flotte wird abgekühlt auf 70°C, abgelasen und einmal kalt gespült.

Man erhält auf der Polyesterfaser eine sehr tiefe, neutrale und klare Rotfärbung mit sehr guten Echtheitseigenschaften. Die Baumwollfaser ist dabei praktisch weiß geblieben, so daß ohne weitere Zwischenreinigung die Baumwollfaseranteile nach den üblichen Methoden sofort weiter gefärbt werden können.

### Beispiel 4

Kräftige Färbungen von Disperse Red 60 erhält man ebenfalls nach einem der oben beschriebenen Färbeverfahren, wenn man Mischungen des Farbstoffs A mit dem Farbstoff E, G, H, I oder K einsetzt.

### Beispiel 5

Man verfährt wie in Beispiel 1 beschieben, verwendet jedoch eine auf den Farbton von Disperse Red 60 eingestellte Mischung aus den Farbstoffen D und F, so erhält man ebenfalls eine kräftige Färbung mit guten Echtheiten.

## Patentansprüche

1. Farbstoffmischung, enthaltend
a) mindestens einen Farbstoff der Formel (I) 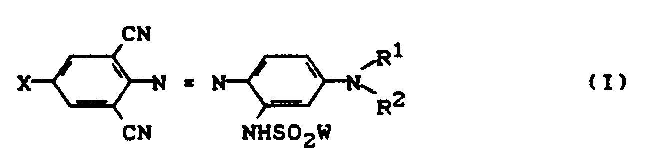 und
b) mindestens einen Farbstoff der Formel (II) 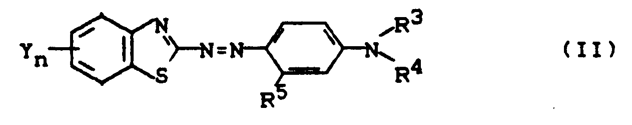 worin
n für die Zahlen 1 oder 2,
X für C₁-C₄-Alkyl, C₁-C₄-Alkoxy oder Cyclohexyl,
Y für Cl, NO₂, CN, SCN oder SO₂W,
R¹, R² für C₁-C₆-Alkyl oder C₁-C₄-Alkoxy-C₂-C₄-Alkyl,
R³ für C₁-C₆-Alkyl oder R⁴,
R⁴ für C₂H₄CN, C₂H₄OCOW oder C₂H₄OCOOW,
R⁵ für H oder CH₃ und
W für C₁-C₄-Alkyl oder Phenyl stehen.

2. Farbstoffmischungen gemäß Anspruch 1, dadurch gekennzeichnet, daß
X für Methyl, Methoxy, t-Butyl oder Cyclohexyl,
Y für Nitro,
R¹ und R² für Ethyl oder n-Propyl,
R³ für Ethyl, n-Butyl oder C₂H₄CN,
R⁴ für C₂H₄OCOW oder - falls R³ = Ethyl/n-Butyl - C₂H₄CN
R⁵ für H und
W für Methyl, Ethyl oder Phenyl stehen.

3. Farbstoffmischungen gemäß Anspruch 1, dadurch gekennzeichnet, daß
X für Methyl,
Y für 6-Nitro,
R¹ und R² für Ethyl oder n-Propyl,
W für Methyl oder Ethyl stehen und
R³,R⁴,R⁵ die vorstehend genannte Bedeutung haben.

4. Farbstoffmischungen gemäß Anspruch 1, dadurch gekennzeichnet, daß der Anteil der Komponente I 10-90 Gew.-% und der Anteil der Komponente II 90-10 Gew.-% beträgt.

5. Farbstoffmischungen gemäß Anspruch 1, dadurch gekennzeichnet, daß sie den Farbstoff der Formel (A) 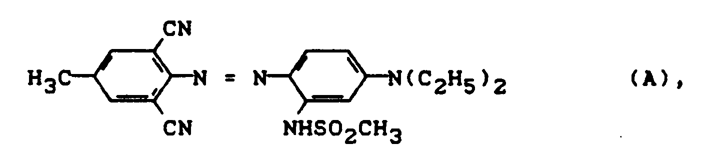 und/oder der Formel (B) 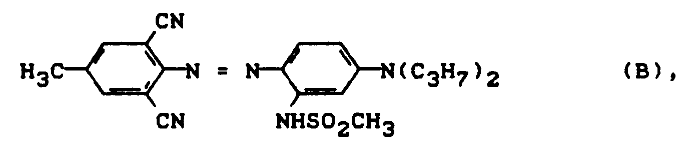 sowie den Farbstoff der Formel (C) 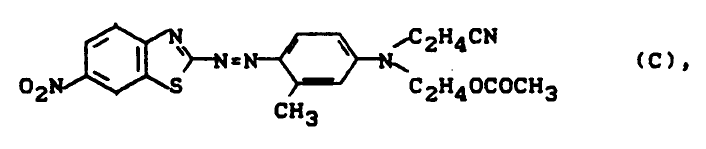 enthalten.

6. Farbstoffpräparation, enthaltend Farbstoffmischungen gemäß Anspruch 1.

7. Verfahren zum Färben und Bedrucken von Polyester-, Celluloseester- oder Polyamidfasern, dadurch gekennzeichnet, daß man Farbstoffmischungen gemäß Anspruch 1 verwendet.

## Claims

1. Dyestuff mixture containing
a) at least one dyestuff of the formula (I) 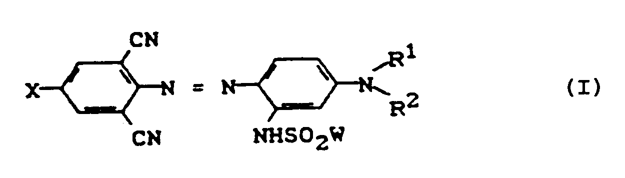 and
b) at least one dyestuff of the formula (II) 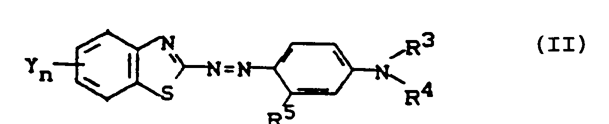 in which
n represents the numbers 1 or 2,
X represents C₁-C₄-alkyl, C₁-C₄-alkoxy or cyclohexyl,
Y represents Cl, NO₂, CN, SCN or SO₂W,
R¹, R² represent C₁-C₆-alkyl or C₁-C₄-alkoxy-C₂-C₄-alkyl,
R³ represents C₁-C₆-alkyl or R⁴,
R⁴ represents C₂H₄CN, C₂H₄OCOW or C₂H₄OCOOW,
R⁵ represents H or CH₃ and
W represents C₁-C₄-alkyl or phenyl.

2. Dyestuff mixtures according to Claim 1, characterized in that
X represents methyl, methoxy, t-butyl or cyclohexyl,
Y represents nitro,
R¹ and R² represent ethyl or n-propyl,
R³ represents ethyl, n-butyl or C₂H₄CN,
R⁴ represents C₂H₄OCOW or, if R³ is ethyl/n-butyl, C₂H₄CN,
R⁵ represents H and
W represents methyl, ethyl or phenyl.

3. Dyestuff mixtures according to Claim 1, characterized in that
X represents methyl,
Y represents 6-nitro,
R¹ and R² represent ethyl or n-propyl,
W represents methyl or ethyl and
R³,R⁴,R⁵ have the abovementioned meaning.

4. Dyestuff mixtures according to Claim 1, characterized in that the amount of component I is 10-90% by weight and the amount of component II is 90-10% by weight.

5. Dyestuff mixtures according to Claim 1, characterized in that they contain the dyestuff of the formula (A) 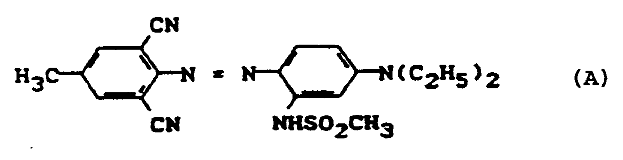 and/or of the formula (B) 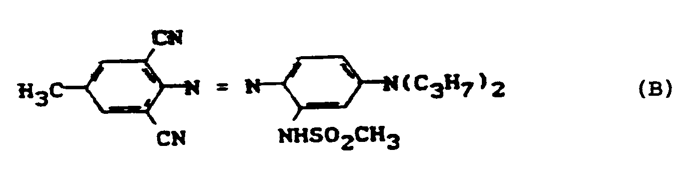 and the dyestuff of the formula (C)

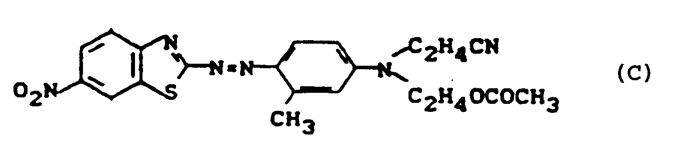

6. Dyestuff preparation containing dyestuff mixtures according to Claim 1.

7. Process for the dyeing and printing of polyester, cellulose ester or polyamide fibres, characterized in that dyestuff mixtures according to Claim 1 are used.

## Revendications

1. Mélange de colorants contenant
a) au moins un colorant de formule (I) 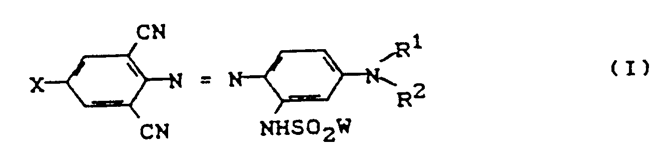 et
b) au moins un colorant de formule (II) 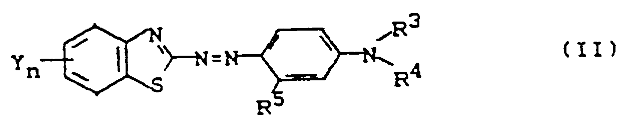 dans lesquelles
n représente le nombre entier 1 ou 2,
X représente un groupement alkyle en C₁-C₄, un groupement alcoxy en C₁-C₄ ou le groupement cyclohexyle,
Y représente Cl, NO₂, CN, SCN ou SO₂W,
R¹, R² représentent un groupement alkyle en C₁-C₆ ou un groupement (alcoxy en C₁-C₄)-(alkyle en C₂-C₄),
R³ représente un groupement alkyle en C₁-C₆ ou R⁴,
R⁴ représente C₂H₄CN, C₂H₄OCOW ou C₂H₄OCOOW,
R⁵ représente H ou CH₃ et
W représente un groupement alkyle en C₁-C₄ ou le groupement phényle.

2. Mélanges de colorants selon la revendication 1, caractérisés en ce que
X représente le groupement méthyle, le groupement méthoxy, le groupement t-butyle ou le groupement cyclohexyle,
Y représente un groupement nitro,
R¹ et R² représentent le groupement éthyle ou le groupement n-propyle,
R³ représente le groupement éthyle, le groupement n-butyle ou C₂H₄CN,
R⁴ représente C₂H₄OCOW ou, si R³ est le groupement éthyle/n-butyle, C₂H₄CN,
R⁵ représente H et
W représente le groupement méthyle, le groupement éthyle ou le groupement phényle.

3. Mélanges de colorants selon la revendication 1, caractérisés en ce que
X représente le groupement méthyle,
Y représente le groupement 6-nitro,
R¹ et R² représentent le groupement éthyle ou le groupement n-propyle,
W représente le groupement méthyle ou le groupement éthyle et
R³, R⁴, R⁵ ont la signification décrite précédemment.

4. Mélanges de colorants selon la revendication 1, caractérisés en ce que la proportion du composant I s'élève à 10-90 % en masse et la proportion du composant II s'élève à 90-10 % en masse.

5. Mélanges de colorants selon la revendication 1, caractérisés en ce qu'ils contiennent le colorant de formule (A) 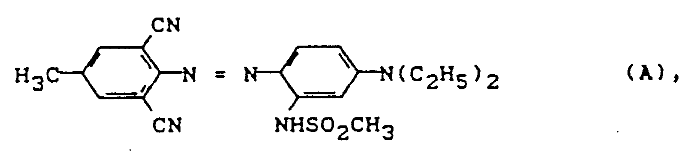 et/ou de formule (B) 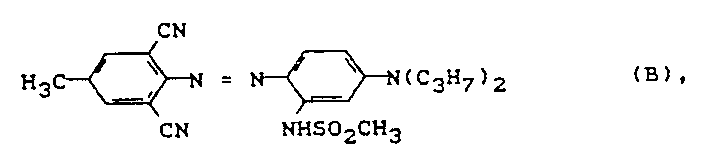 ainsi que le colorant de formule (C)

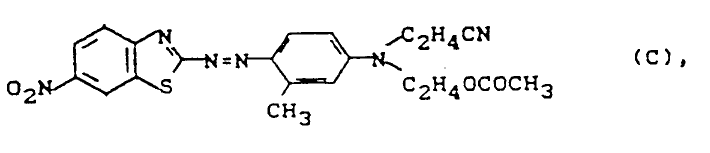

6. Préparation de eolorants contenant des mélanges de colorants selon la revendication 1.

7. Procédé de teinture et d'impression de fibres en polyester, en ester de cellulose ou en polyamide, caractérisé en ce qu'on utilise des mélanges de colorants selon la revendication 1.
